Europäisches Patentamt

European Patent Office

Office européen des brevets

(11) Numéro de publication: **0 268 510 B1**

# FASCICULE DE BREVET EUROPEEN

(45) Date de publication de fascicule du brevet:
20.03.91

(51) Int. Cl.5: **F16B 5/10**, F16B 41/00

(21) Numéro de dépôt: **87402327.8**

(22) Date de dépôt: **16.10.87**

(54) **Dispositif de fixation en aveugle pour l'assemblage d'au moins deux pièces telles que des tôles.**

(30) Priorité: **17.10.86 FR 8614470**

(43) Date de publication de la demande:
**25.05.88 Bulletin 88/21**

(45) Mention de la délivrance du brevet:
**20.03.91 Bulletin 91/12**

(84) Etats contractants désignés:
**BE CH DE ES GB IT LI**

(56) Documents cités:
**DE-A- 1 171 209**
**FR-A- 2 372 986**
**GB-A- 561 215**

(73) Titulaire: **Kanas, André**
**42, Place Jules Ferry**
**F-92120 Montrouge(FR)**

(72) Inventeur: **Kanas, André**
**42, Place Jules Ferry**
**F-92120 Montrouge(FR)**

(74) Mandataire: **Berger, Helmut et al**
**Cabinet Z. WEINSTEIN 20, avenue de Friedland**
**F-75008 Paris(FR)**

Rank Xerox (UK) Business Services

## Description

La présente invention concerne un dispositif de fixation en aveugle pour l'assemblage d'au moins deux pièces telles que des tôles, du type comprenant une vis pourvue d'une tête et d'un écrou conformés, l'un ou l'autre pour former l'organe de serrage de pièces à assembler, par déplacement axial, où l'organe rotatif de commande du déplacement axial, destiné à traverser des trous pratiqués dans lesdites pièces à assembler et présentant une forme non circulaire permettant ou interdisant audit organe de serrage également de forme non circulaire son passage à travers lesdits trous, selon sa position angulaire, une cage-guide de ladite vis, traversé axialement par celle-ci et conformé pour traverser lesdits trous, comportant à une extrémité une partie formant tête d'appui sur l'une des pièces à assembler et à son autre extrémité libre un évidement de guidage axial de l'organe de serrage, conformé pour permettre l'engagement et le déplacement axial en translation de ces derniers, dans une position d'interdiction de passage à travers le trou sous l'effet de la rotation de l'organe rotatif, l'organe de serrage pouvant être amené dans sa position angulaire de passage, par l'organe rotatif, lorsqu'il n'est plus engagé dans l'évidement.

Il existe déjà dans le commerce des dispositifs de fixation de ce type voir p.ex. GB-A-561215 fig.X. Dans de tels dispositifs, l'organe axialement mobile dans la cage-guide est formé par la tête de la vis et l'assemblage par des forces de serrage entre la tête de vis et l'écrou s'accomplit par rotation de ce dernier, à l'aide d'un outil approprié. Dans ce cas, la vis pourrait former la pièce aveugle ou inacessible. L'imperméabilité de la vis peut être obtenue par matage du bout de la tige de vis filetée.

Ce dispositif présente l'inconvénient d'une saillie excessive de la tige de vis filetée à l'extérieur, en dépassant de l'écrou, ce qui nuit par example à la continuité de la surface externe, à son aspect esthétique et à ses caractéristiques aérodynamiques et rend le dispositif coûteux dans la mesure où il implique l'utilisation d'une vis d'une longueur relativement importante, en raison du matage qui entraîne une déformation du filetage au niveau de l'extrémité libre de la vis. De plus, la déformation du filetage implique un risque de coincement de l'écrou en cas de dévissage excessif de celui-ci et de perte de la vis dans la partie aveugle ou inaccessible en cas de déblocage forcé excessif de l'écrou. En outre, le matage de l'extrémité de la vis constitue une opération supplémentaire lors du travail d'assemblage, qui pèse dans les coûts de ce travail.

Dans un autre type du dispositif défini plus haut, c'est l'écrou qui constitue l'organe mobile et guidé dans la cage-guide lors de la rotation de la tête de la vis. Comme dans le cas précédent, l'extrémité de la tige filetée de la vis est matée, pour éviter que l'écrou qui pourrait être l'organe accessible se perde.

Ce dispositif présente l'inconvénient occasionné du matage, qui vient d'être décrit. De plus, en cas de montage et de démontage en position verticale de la vis avec la tête en bas, il y a risque de difficultés opératoires. En effet, la tête de la vis peut se dégager sous son poids de la cage-guide de sorte que la manoeuvre n'est possible qu'en la repoussant à fond dans celui-ci.

La présente invention a pour but de proposer un dispositif qui ne présente plus les inconvénients des dispositifs connus, qui viennent d'être décrits.

Pour atteindre ce but, le dispositif de fixation selon l'invention est caractérisé en ce que la cage-guide comprend des moyens rendant la vis imperdable.

Selon une caractéristique de l'invention, dans le cas où la tête de la vis est l'organe axialement mobile en translation dans l'évidement de la cage-guide et la partie formant tête de ce dernier présente un trou lisse sensiblement cylindrique pour le passage de la vis, ce trou lisse de la cage-guide comporte un rebord annulaire interne et la vis présente à son extrémité libre une partie filetée conique allant en se rétrécissant vers l'extrémité de la vis et dont la base forme un épaulement faisant radialement saillie vers l'extérieur, le rebord de la cage-guide et l'épaulement de la vis étant conformés et situés de telle manière que lors de l'introduction de la vis dans la cage-guide et juste avant que la tête de vis soit engagée dans ledit évidement, cet épaulement franchit irréversiblement de force ce rebord par déformation élastique de celui-ci.

Selon une autre caractéristique avantageuse de l'invention et dans le cas où la tête de la vis forme l'organe rotatif et l'écrou constitue l'organe axialement déplaçable en translation dans l'évidement de guidage de la cage-guide, ce dernier présente à son extrémité libre en prolongement axial une partie formant cage pour l'écrou, se terminant par un élément de retenue axial de l'écrou et délimitant en prolongement axial de l'évidement de la cage-guide un espace permettant un mouvement angulaire de l'écrou de sa position de blocage précitée dans une position de passage précitée à travers les trous des pièces à assembler, et la vis présente à son extrémité libre en prolongement axial de sa partie filetée une partie d'embout de plus faible diamètre restant engagée dans l'écrou et formant moyen de retenue radial de celui-ci.

Selon une caractéristique avantageuse dans ce dernier dispositif de fixation selon l'invention, la tête de la cage-guide présente un évidement à contre-dépouille et la tête de la vis présente une forme permettant son emmanchement à force dans cet évidement et sa retenue dans celui-ci.

Selon encore une autre caractéristique avantageuse, l'élément de retenue axial de l'écrou, de la partie formant cage d'écrou de la cage-guide est formé par une traverse s'étendant perpendiculairement à l'axe de la cage-guide, cette traverse étant avantageusement bombée vers l'intérieur de la cage afin de repousser l'écrou sur le filetage de la vis.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :

La figure 1 est une vue en coupe axiale d'un premier mode de réalisation d'un dispositif de fixation selon l'invention et montre celui-ci dans sa position d'assemblage par serrage ;

La figure 2 est une vue en coupe selon la ligne II-II de la figure 1 ;

La figure 3 est une vue en coupe axiale du premier mode de réalisation du dispositif selon l'invention, mais montre celui-ci dans sa position permettant un désassemblage des deux pièces représentées ;

La figure 4 est une vue en coupe selon la ligne IV-IV de la figure 3 ;

La figure 5 est une vue en coupe axiale d'un deuxième mode de réalisation du dispositif de fixation selon l'invention, suivant la ligne V-V de la figure 6, le dispositif étant montré dans sa position d'assemblage ;

La figure 6 est une vue en coupe selon la ligne VI-VI de la figure 5 ;

La figure 7 est une vue en coupe selon la ligne VII-VII de la figure 5 ;

La figure 8 est une vue en coupe axiale et suivant les flèches VIII-VIII de la figure 9 et montrant le deuxième mode de réalisation dans sa position de désassemblage et

La figure 9 est une vue en coupe selon la ligne IX-IX de la figure 8.

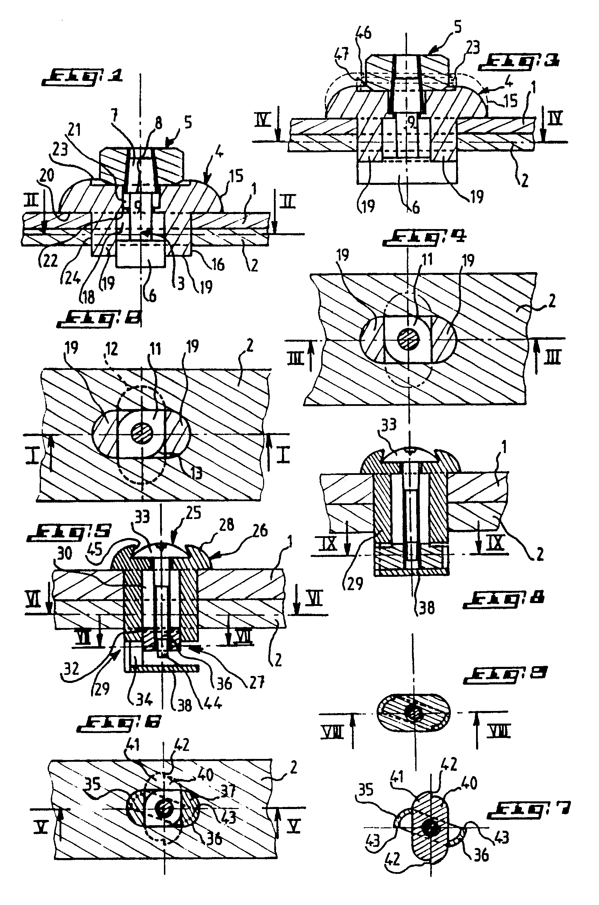

Les figures 1 à 4 montrent à titre d'exemple un premier mode de réalisation du dispositif de fixation en aveugle selon la présente invention, utilisé pour l'assemblage de deux tôles 1 et 2. Les symboles de référence 3, 4 et 5 désignent respectivement les trois pièces du dispositif de fixation selon l'invention, à savoir la vis, la cage-guide et l'écrou destiné à coopérer avec la vis 3.

La vis 3 comprend une tête 6 et une partie 7 filetée conique se rétrécissant en direction de l'extrémité libre de la vis et dont la base 8 forme un épaulement radialement en saillie depuis la partie cylindrique lisse 9 de la vis. La tête 6 de la vis présente un profil non circulaire. Comme il ressort notamment de la figure 2, la tête 6 a une forme oblongue qui se compose d'une partie centrale parallélépipèdique 11 et, de part et d'autre de celle-ci, une partie semi-cylindrique 12. Du côté de la tige de vis 9, la tête 6 présente une partie formant came 13 obtenue en découpant les coins de la partie parallélépipèdique 11 jusqu'à une profondeur prédéterminée. La partie formant came 13 présente ainsi des parties arrondies convexes dont le rayon est sensiblement égal à la moitié de la largeur de la partie centrale 11.

La cage-guide 4 par exemple en matière plastique comporte une partie formant tête 15 à section transversale sensiblement circulaire et une partie formant tige 16. En se reportant à la figure 2, on constate que la tige 16 présente un profil de forme oblongue correspondant au profil de la tête de vis 6, mais dont la partie centrale est évidée pour obtenir un évidement 18 de forme générale parallélépipèdique ou plutôt carrée dans lequel peut s'engager et se déplacer axialement en translation la tête de vis 6. Les parties de la tige 16 qui subsistent forment des branches 19 de forme extérieure semi-cylindrique.

Dans l'exemple représenté de la cage-guide 4, l'évidement 18 s'étend en profondeur jusqu'au niveau de la surface d'appui 20 de la tête 15 du guide 4. La tête 15 comprend un trou central cylindrique 21 qui communique avec l'évidement 18 et permet le passage de la vis 3. On constate que le trou lisse 21 présente au niveau de son ouverture dans l'évidement 18 un rebord annulaire interne 22 qui est élastiquement déformable. Le diamètre de ce rebord annulaire est choisi de telle façon que lors de l'introduction de la vis 3 à partir du côté de la tige 16 de la cage-guide 4, la base 8 du filetage conique 7 de la tige de vis puisse franchir le rebord annulaire 22 en déformant celui-ci élastiquement, sans pouvoir revenir en arrière. Ainsi l'introduction de la vis 3 dans la cage-guide 4 est irréversible. Autrement dit, la vis 3 est imperdable.

Pour complèter la description du mode de réalisation suivant les figures 1 et 4, on constate dans la face supérieure de la tête 15 du guide 4 un évidement 23 pour le placement de l'écrou 5. Ce dernier présente bien entendu un filetage interne conique complémentaire ou filetage conique 7 de la vis 3.

On décrira ci-après le fonctionnement du mode de réalisation selon les figures 1 à 4, pour l'assemblage de deux tôles 1 et 2. Au préalable on avait pratiqué des trous 24 dans les deux tôles qui présentent une forme correspondant au profil de la tige 16 de la cage-guide 4 et de la tête 6 de la vis 3, pour permettre le passage de la tête 6 et de la tige 16 à travers ces trous de tôles axialement alignés, comme cela est montré sur la figure 1.

Dans une première opération on met en place la cage-guide 4 pour qu'elle se trouve dans la position représentée aux figures 1 et 3, la tête 4 prenant appui par sa face 20 sur la tôle 1. Ensuite on introduit la vis 3 dans la cage-guide 4 à partir du côté de la tôle 2, en engageant la tête 6 dans l'évidement 18 du guide 4. La forme conique de l'embout fileté de la vis facilite cette opération. En exerçant une certaine force de poussée sur la vis 3, on obtient que la base 8 de la partie filetée conique 7 franchisse irréversiblement le rebord annulaire 22 de la cage-guide 4, par déformation élastique de ce rebord. En posant ensuite l'écrou 5 et en faisant tourner celle-ci, on force la tête 6 de se déplacer axialement en translation dans l'évidement 18 jusqu'à ce que l'assemblage par serrage des deux tôles 1 et 2 soit réalisé. On constate que la tête 6 de la vis 3 occupe une position perpendiculaire à celle des trous à travers les deux tôles 1 et 2.

Pour désassembler les deux tôles 1 et 2 on fait tourner l'écrou 5 dans le sens inverse, ce qui provoque le déplacement axial en translation de la tête 6 en direction de l'ouverture vers l'extérieur de l'évidement 18. Lorsque la tête 6 atteint une position dans laquelle la partie centrale 11, à l'exception de la partie formant came 13 vient juste de se dégager de l'évidement 18 et lorsqu'on continue à tourner l'écrou, la tête 6 peut exécuter un mouvement angulaire autour de l'axe de la vis. Cependant celui-ci est limité à un quart de tour en raison de la forme particulière de la came 13 de la vis qui reste engagée dans l'évidement 18. La tête 6 occupe alors la position représentée aux figures 3 et 4. Comme le montre la figure 3, dans cette position la base 8 de la partie filetée conique 7 de la vis 3 bute contre le rebord annulaire 22 de la cage-guide 4, ce qui conditionne la position finale axiale de la vis 6 et permet ensuite en tournant l'écrou 5 dans le sens inverse d'obtenir que la tête 6 se réengage dans l'évidement 18 de la cage-guide 4 et se déplace à nouveau axialement et en translation dans celui-ci en vue d'un nouvel assemblage de deux pièces. En se référant à nouveau aux figures 3 et 4, on constate que dans la position représentée de la tête de la vis 6, les deux tôles 1 et 2 peuvent être séparées l'une de l'autre.

Les figures 5 à 9 représentent un deuxième mode de réalisation du dispositif de fixation en aveugle selon la présente invention. La vis, la cage-guide et l'écrou sont désignés respectivement par les numéros de référence 25, 26 et 27. Ces trois pièces coopèrent de la même manière que dans le mode de réalisation selon les figures 1 à 4, pour obtenir l'assemblage de deux tôles 1 et 2. Comme précédemment, la cage-guide 26 présente une partie formant tête 28 et une partie formant tige 29 délimitant comme dans le premier mode de réalisation un évidement de guidage indiqué maintenant par le numéro de référence 30. Dans ce deuxième mode de réalisation, c'est l'écrou 27 qui forme l'organe qui s'engage dans l'évidement 30 de la cage-guide 26 et est guidé dans celle-ci lors de son déplacement axial en translation. L'écrou 27 est conformé de la même manière que la tête 6 de la vis 3 dans le premier mode de réalisation et présente donc du côté de l'évidement 30 une partie formant came centrale 32. Concernant la vis 3, on constate que c'est maintenant sa tête 33 qu'il faut tourner pour obtenir le mouvement de serrage et de déserrage de l'écrou 27. Cependant, ce deuxième mode de réalisation se distingue du premier par la réalisation des moyens rendant la vis imperdable dans la cage-guide.

Comme le montrent bien les figures 5 et 8, la cage-guide 26 comprend, en alignement axial de sa tige, une partie formant cage 34 qui délimite un espace dans lequel l'écrou 27 peut effectuer un mouvement angulaire d'un quart de tour après son désengagement de l'évidement 30, la partie formant came 32 restant engagée dans cet évidement. Cette cage 34 est formée par deux parois de faible épaisseur 35, 36 en prolongement des surfaces extérieures des branches en forme de demi-cercle 37 de la tige de la cage-guide. Chaque paroi 35, 36 s'étend sur un quart de cercle à la périphérie des branches 37 entre l'axe longitudinal du profil de la tige et la surface de délimitation de l'évidement 30. Comme il ressort clairement des figures, les deux parois 35, 36 sont situées de façon symétrique par rapport à l'axe de la cage-guide 26. Les extrémités libres des deux parois 35, 36 sont reliées par un élément formant traverse 38 qui s'étend perpendiculairement à l'axe de la cage-guide et ainsi de la vis 25. La traverse est légèrement bombée vers l'intérieur pour exercer une pression sur l'écrou 27 pour repousser celui-ci sur la partie filetée 36 maintenant de forme cylindrique.

L'écrou 27 tout en ayant la même forme générale que la tête 6 du premier mode de réalisation présente une particularité de structure au niveau de ses parties arrondies, en fonction de la forme de la cage 34. Ainsi les parties 40 formant moitié des extrémités arrondies qui après rotation d'un quart de tour de la vis 36 se trouvent au contact avec les surfaces internes des parois respectivement 35, 36 de la cage 34 présentent une courbure selon un rayon quelque peu inférieur à celui de la face interne de ces parois. L'autre moitié 41 de la partie arrondie de l'écrou présente un profil correspondant à celui de la tige de la cage-guide. Ces deux parties 40 et 41 forment entre elles au niveau de l'axe de plus grande longueur de l'écrou un épaulement 42 qui limite le mouvement angulaire de l'écrou lorsqu'il vient en appui sur les surfaces frontales 43 des parois 35, 36.

La traverse 38 de la cage 34 constitue un moyen de retenue de l'écrou 27 dans la direction axiale du dispositif. Celui-ci comprend également des moyens destinés à retenir cet écrou dans la direction radiale, à l'intérieur de la cage 34. A cette fin la vis 27 comprend à son extrémité libre en prolongement de la partie filetée 36 un embout cylindrique lisse 44 de plus faible diamètre, qui reste toujours engagé dans le trou de l'écrou, même lorsque celui-ci se trouve dans sa position permettant le désassemblage des deux tôles 1 et 2, représentée à la figure 8.

On constate encore, que la tête 28 de la cage-guide 26 est pourvue d'un évidement en contre-dépouille 45 dans laquelle sera emmanchée par force la tête 33 de la vis. Celle-ci est donc retenue dans la cage-guide.

Les opérations à effectuer pour l'assemblage et le désassemblage des deux tôles 1 et 2, à l'aide du dispositif selon le deuxième mode de réalisation sont pratiquement les mêmes que dans le cas du dispositif selon les figures 1 à 4. Il n'est donc pas nécessaire de les décrire spécialement. Il suffit de se rappeler que dans le deuxième mode de réalisation la vis 26 et l'écrou 27 restent emprisonnés dans la cage-guide 26 en raison de l'engagement de la tête de vis 33 dans l'évidement à contre-dépouille 45 dans la tête de la cage-guide 26 et de la cage 37 en prolongement axial de la tige du guide 26 ainsi que la forme quelque peu particulière des parties arrondies 40 et 41 de l'écrou 27.

On pourrait également prévoir dans le mode de réalisation représenté aux figures 1 à 4 des moyens permettant de rendre l'écrou 5 imperdable. A cette fin on pourrait avantageusement faire en sorte que l'évidement 23 dans la tête 15 de la cage-guide 4 présente une hauteur plus importante comme cela est indiqué en traits interrompus à la figure 3. En haut de cet évidement, on pourrait prévoir un rebord annulaire 46 déformable élastiquement, en forme d'une lèvre qui fait radialement saillie vers l'intérieur de l'évidement.

En prévoyant à l'extrémité de l'écrou 5, qui s'engage dans l'évidement 23, une partie 47 radialement saillante vers l'extérieur en forme d'une rondelle, d'un diamètre supérieur à celui du rebord annulaire 46 et légèrement inférieure à celui de l'évidement 23, l'écrou une fois introduit dans l'évidement par emmanchement forcé est retenu en place par l'emprisonnement de la partie rondelle 47 dans l'évidement. Bien entendu la partie de l'écrou qui reste en dehors de l'évidement 23 doit être suffisante pour permettre la rotation de l'écrou.

## Revendications

1. Dispositif de fixation en aveugle pour l'assemblage d'au moins deux pièces telles (1,2) que des tôles, du type comprenant une vis (3, 25) pourvue d'une tête (6, 33) et d'un écrou (5, 27) conformés l'un ou l'autre pour former l'organe de serrage des pièces à assembler, par déplacement axial, où l'organe rotatif de commande du déplacement axial, destiné à traverser des trous pratiqués dans lesdites pièces à assembler et présentant une forme non circulaire permettant ou interdisant audit organe de serrage également de forme non circulaire son passage à travers lesdits trous, selon sa position angulaire, une cage-guide (4,26) de ladite vis (3, 25), traversé axialement par celle-ci et conformé pour traverser lesdits trous, comportant à une extrémité une partie formant tête (15, 28) d'appui sur l'une des pièces à assembler et à son autre extrémité libre un évidement (18, 30) de guidage axial de l'organe de serrage dans une position d'interdiction de passage à travers les trous, sous l'effet de la rotation de l'organe rotatif, l'organe de serrage (6 ou 5) pouvant être amené dans sa position angulaire de passage, par l'organe rotatif (5 ou 6), lorsqu'il n'est plus engagé dans ledit évidement (18), caractérisé en ce que la cage-guide (4, 26) comprend des moyens (8, 22, 34) retenant en contact mutuel le cage-guide et la vis (3)ou l'écrou (27).

2. Dispositif selon la revendication 1, dans lequel la tête (6) de la vis (3) est l'organe de serrage par déplacement axial dans l'évidement de la cage-guide et la partie formant tête (15) de ce dernier présente un trou lisse (21) pour le passage de la vis (3), caractérisé en ce que ledit trou (21) comporte un rebord annulaire interne (22) élastiquement déformable et la vis (3) présente à son extrémité libre une partie filetée avantageusement conique (7) allant en se rétrécissant vers l'extrémité de la vis et dont la base (8) forme un épaulement faisant radialement saillie vers l'extérieur, le rebord (22) de la cage-guide (4) et l'épaulement (8) de la vis étant conformés et disposés de telle manière que lors de l'introduction de la vis dans la cage-guide et sensiblement au moment où la tête de vis s'engage dans ledit évidement (18), l'épaulement (8) franchit irréversiblement de force le rebord (22) par déformation élastique de celui-ci.

3. Dispositif selon la revendication 2, dont la tête de vis comporte du côté de la tige de vis une came de limitation du mouvement angulaire de la tête de vis de sa position d'interdiction de passage dans une position de passage à travers les trous des pièces à assembler, en restant engagée dans l'évidement de la cage-guide, caractérisé en ce que la distance axiale entre ladite came (13) et l'épaulement (8) de la vis (3) est telle que la came reste engagée dans l'évidement (18) de la cage-guide lorsque l'épaulement (8) bute contre le rebord annulaire (22) après son franchissement irréversible de ce rebord.

4. Dispositif selon la revendication 1, dans le cas où la tête de la vis (25) forme l'organe rotatif et l'écrou (27) constitue l'organe axialement déplaçable en translation dans l'évidement de guidage (30) de la cage-guide (26), caractérisé en ce que cette cage-guide (26) présente à son extrémité libre en prolongement axial une partie formant cage 34 pour l'écrou (27), se terminant par un élément de retenue axiale (38) de l'écrou et délimitant en prolongement axial de l'évidement (30) de la cage-guide un espace permettant un mouvement angulaire de l'écrou (27) (27) de sa position de blocage précitée dans une position de passage précitée à travers les trous des pièces (1, 2) à assembler, et la vis présente à son extrémité libre en prolongement axial de sa partie filetée une partie d'embout (44) de plus faible diamètre qui reste engagée dans l'écrou (27) et forme un moyen de retenue radial de celui-ci.

5. Dispositif selon la revendication 3 ou 4, caractérisé en ce que la tête (28) de la cage-guide (26) comprend un évidement à contre-dépouille (45) et que la tête (33) de la vis (27) présente une forme permettant son emmanchement à force dans ledit évidement et son maintien dans celui-ci.

6. Dispositif selon l'une des revendications 4 ou 5, caractérisé en ce que les moyens de retenue axiale de l'écrou (27) dans la cage (34) sont formés par un élément formant traverse (38) s'étendant perpendiculairement à l'axe de la vis et étant avantageusement légèrement bombés vers l'intérieur de la cage afin de repousser l'écrou (27) sur le filetage de la vis (25).

7. Dispositif selon l'une des revendications 4 à 6, caractérisé en ce que la partie (34) formant cage de rotation de l'écrou (27) comprend des moyens de blocage (43) de l'écrou dans sa position de passage précitée.

8. Dispositif selon l'une des revendications 4 à 7, dans lequel la partie formant tige (29) de la cage-guide (26) comprend deux branches (37) de forme extérieure semi-cylindrique et délimitant entre elles l'évidement (30) précité de forme parallélépipèdique et l'écrou (22) présente un profil oval correspondant à celui de ladite tige, caractérisé en ce que la partie formant cage de rotation (34) de l'écrou (27) comprend une paroi (35,36) de faible épaisseur en prolongement de la surface extérieure de chacune des branches (29) de la tige de la cage-guide et s'étendant depuis le bord de l'évidement de guidage (30) sensiblement jusqu'à l'axe longitudinal de la section transversale de celle-ci; sur un quart de cercle, ces parois (35,36) étant situées symétriquement par rapport à l'axe de la cage-guide, et en ce que les extrémités arrondies (37) de l'écrou (27) présentent chacune une partie à profil en demi-cercle (40) dont le rayon est lègèrement inférieur au rayon de la surface interne des parois de cage (35, 36) et une partie à profil en demi-cercle (41) dont le rayon est identique au rayon de la surface externe de la tige de la cage-guide, un épaulement (42) étant formé entre les deux parties d'extrémité (40, 41) de l'écrou, de façon que le mouvement angulaire de l'écrou (27) dans la cage (34) soit limité à un quart de tour.

9. Dispositif selon l'une des revendications 1 à 3, caractérisé en ce que la tête (15) de la cage-guide (4) comprend un évidement (23) présentant à son extrémité ouverte une partie formant lèvre (46) élastiquement déformable et étendant radialement vers l'axe de l'écrou (5) et l'écrou (5) possède à son extrémité d'appui sur la tête (15) de la cage-guide une partie en fcrme d'une rondelle (47) qui fait saillie radialement vers l'extérieur du rayon de l'écrou et présente un diamètre supérieur à celui de la lèvre circulaire (46) de la tête (15) et inférieur à celui de l'évidement (23) pour assurer la retenue de l'écrou sur la tête de la cage-guide par emprisonnement de la partie rondelle (47) dans l'évidement (23) de la tête (15).

## Claims

1. Blind-fastening device for the assembly of at least two parts (1, 2) such as metal sheets, of the type comprising a screw (3, 25) provided with a head (6, 33) and with a nut (5, 27) shaped either one so as to form the member for clamping the parts to be assembled through axial displacement or the rotary member for operating the axial displacement, adapted to extend through holes formed in the said parts to be assembled and exhibiting a non-circular shape permitting or preventing said clamping member also of non-circular shape to pass or from passing through the said holes, according to its angular position, a guide cage (4, 26) for the said screw (3, 25), through which the latter extends axially and shaped to extend through the said holes, comprising at one end a portion (15, 28) forming a head bearing upon one of the parts to be assembled and at its other free end a recess (18, 30) for axially guiding the clamping member into a position preventing the passage through the holes under the effect of the rotation of the rotary member, the clamping member (6 or 5) being able to be brought into its angular passage position by the rotary member (5 or 6) when it is no longer engaging the said recess (18), characterized in that the guide cage (4, 26) comprises means (8, 22, 34) retaining the guide cage and the screw (3) or the nut (27) in mutual contact.

2. Device according to claim 1, wherein the head (6) of the screw (3) is the member for clamping through axial displacement in the recess of the guide cage and the head portion (15) of the latter exhibits a smooth hole (21) for the passage of the screw (3), characterized in that the said hole (21) comprises an elastically deformable, inner annular ledge (22) and the screw (3) exhibits at its free end an advantageously conical threaded portion (7) tapering towards the end of the screw and the base (8) of which forms a shoulder radially projecting outwards, the ledge (22) of the guide cage (4) and the shoulder (8) of the screw being shaped and arranged in such a manner that upon the insertion of the screw into the guide cage and substantially at the time where the screw head engages the said recess (18), the shoulder (8) irreversibly forcibly moves past the ledge (22) through elastic deformation of the latter.

3. Device according to claim 2, of which the screw head comprises towards the screw shank a cam for the limitation of the angular movement of the screw head from its position preventing the passage to a position of passage through the holes of the parts to be assembled while remaining engaged with the recess of the guide cage, characterized in that the axial distance between the said cam (13) and the shoulder (8) of the screw (3) is such that the cam remains engaged with the recess (18) of the guide cage when the shoulder (8) abuts against the annular ledge (22) after having irreversibly moved past this ledge.

4. Device according to claim 1, in the case where the head of the screw (25) forms the rotary member and the nut (27) constitutes the member axially displaceable according to a translatory motion in the guiding recess (30) of the guide cage (26), characterized in that this guide cage (26) exhibits at its free end in axial extension a portion (34) forming a cage for the nut (27), terminating into an element (38) for axially retaining the nut and defining in axial extension of the recess (30) of the guide cage a space allowing an angular motion of the nut (27) from its aforesaid locking position into an aforesaid position of passage through the holes of the parts (1, 2) to be assembled and the screw exhibits at its free end in axial extension of its threaded portion a tip portion (44) of smaller diameter which remains engaged with the nut (27) and forms a means for axially retaining the latter.

5. Device according to claim 3 or 4, characterized in that the head (28) of the guide cage (26) comprises an undercut recess (45) and in that the head (33) of the screw (27) exhibits a shape permitting it to be force-fitted into the said recess and to be maintained in the latter.

6. Device according to one of claims 4 or 5, characterized in that the means for axially retaining the nut (27) within the cage (34) are formed of an element forming a cross-piece (38) extending perpendicularly to the axis of the screw and being advantageously slightly bulged inwards of the cage in order to push the nut (27) back onto the threading of the screw (25).

7. Device according to one of claims 4 to 6, characterized in that the portion (34) forming a cage of rotation of the nut (27) comprises means (43) for locking the nut in its aforesaid passage position.

8. Device according to one of claims 4 to 7, wherein the rod forming portion (29) of the guide cage (26) comprises two legs (37) of semi-cylindrical outside shape and defining therebetween the aforesaid recess (30) of parallelepipedic shape and the nut (22) exhibits an oval profile corresponding to that of the said rod, characterized in that the portion (34) forming the rotation cage of the nut (27) comprises a wall (35, 36) of small thickness in extension of the outer surface of each one of the legs (29) of the rod of the guide cage and extending from the edge of the guiding recess (30) substantially to the longitudinal axis of the cross-section thereof; over a quarter circle these walls (35, 36) being located symmetrically with respect to the axis of the guide cage and in that the rounded ends (37) of the nut (27) exhibit each one a portion with a half-circle profile (40) the radius of which is slightly smaller than the radius of the inner surface of the cage walls (35, 36) and a portion with a half-circle profile (41) the radius of which is identical to the radius of the outer surface of the rod of the guide cage, a shoulder (42) being formed between both end portions (40, 41) of the nut so that the angular movement of the nut (27) within the cage (34) be limited to one fourth of revolution.

9. Device according to one of claims 1 to 3, characterized in that the head (15) of the guide cage (4) comprises a recess (23) exhibiting at its open end a portion (46) forming an elastically deformable lip and extending radially towards the axis of the nut (5) and the nut (5) has at its end bearing upon the head (15) of the guide cage a portion in the shape of a washer (47) which projects radially outwards of the radius of the nut and exhibits a diameter greater than that of the circular lip (46) of the head (15) and smaller than that of the recess (23) to provide for the retaining of the nut onto the head of the guide cage by entrapping the washer portion (47) within the recess (23) of the head (15).

**Ansprüche**

1. Vorrichtung zur Blindbefestigung von mindestens zwei Teilen (1,2) wie Blechen, mit einer Schraube (3,25), die einen Kopf (6,33) und eine Mutter (5,27) aufweist, von denen der oder die eine oder andere ausgebildet ist, um das Organ zum Verspannen der miteinander zu verbindenden Teile durch eine axiale Bewegung oder das drehbare Organ zur Steuerung der axialen Bewegung zu bilden, das dazu bestimmt ist, Löcher zu durchqueren, die in den genannten miteinander zu verbindenden Teilen ausgebildet sind und eine nicht kreisförmige Form haben, die es dem Spannorgan, das ebenfalls eine nicht kreisförmige Form hat, gemäss seiner Winkelstellung ermöglicht oder verbietet, sich durch die genannten Löcher hindurch zu erstrecken, ein Führungskäfig (4,26) für die genannte Schraube (3,25) , der axial von dieser durchlaufen wird und ausgebildet ist, um die genannten Löcher zu durchlaufen , an einem Ende einen Kopfteil (15,28) zum Abstützen auf einem der miteinander zu verbindenden Teile und an seinem anderen freien Ende eine Ausnehmung (18,30) zur axialen Führung des Verspannorgans in einer Stellung, in der das Durchlaufen durch die Löcher unter der Drehwirkung des drehbaren Organs unterbunden ist, besitzt, wobei das Spannorgan (6 oder 5) durch das Drehorgan (5 oder 6) in seine Durchgangswinkelstellung gebracht werden kann, wenn es sich nicht in der genannten Ausnehmung (18) befindet, dadurch gekennzeichnet, dass der Führungskäfig (4,26) Mittel (8,22, 34) besitzt, die den Führungskäfig und die Schraube (3) oder die Mutter(27) in gegenseitigem Kontakt halten.

2. Vorrichtung nach Anspruch 1, bei der der Kopf (6) der Schraube (3) das Organ zum Verspannen durch axiale Bewegung in der Ausnehmung des Führungskäfigs ist und der Kopfteil (15) von letzterem ein glattes Loch (21) zum Durchgang der Schraube (3) besitzt, dadurch gekennzeichnet, dass das genannte Loch (21) einen inneren ringförmigen elastisch verformbaren Bund (22) besitzt, und die Schraube (3) an ihrem freien Ende einen vorteilhafterweise konischen Gewindebereich (7) besitzt, der sich zum Ende der Schraube hin verjüngt und dessen Basis (8) eine radial nach aussen vorspringende Schulter bildet, wobei der Bund (22) des Führungskäfigs (4) und die Schulter (8) der Schraube so ausgebildet und angeordnet sind, dass bei der Einführung der Schraube in den Führungskäfig und im wesentlichen im Moment, wo der Schraubenkopf sich in die genannte Ausnehmung (18) engagiert, die Schulter (8) in nicht durch Kraftaufbringung rückgängig zu machender Weise den Bund (22) durch elastische Verformung von diesem überschreitet.

3. Vorrichtung nach Anspruch 2, dessen Schraubenkopf auf der Seite des Schraubenschaftes einen Nocken zur Begrenzug der Winkelbewegung des Schraubenkopfes von seiner den Durchlauf verbietenden Stellung in eine den Durchlauf durch die Löcher der miteinander zu verbindenden Teile gestattenden Stellung besitzt und dabei in der Ausnehmung des Führungskäfigs engagiert bleibt, dadurch gekennzeichnet, dass der axiale Abstand zwischen dem genannten Nocken (13) und der Schulter (8) der Schraube (3) so ist, dass der Nocken in der Ausnehmung (18) des Führungskäfigs engagiert bleibt , wenn die Schulter (8) gegen den ringförmigen Bund (22) nach ihrem nicht rückgängig zu machenden Ueberschreiten dieses Bundes stösst.

4. Vorrichtung nach Anspruch 1, für den Fall, dass der Schraubenkopf (25) das drehbare Organ bildet und die Mutter (27) das axial translatorisch in die Führungsausnehmung (30) des Führungskäfigs (26) bewegliche Organ darstellt, dadurch gekennzeichnet, dass dieser Führungskäfig (26) an seinem freien Ende in axialer Verlängerung einen Bereich besitzt, der einen Käfig 34 für die Mutter (27) bildet, in einem Element (38) zum axialen Festhalten der Mutter endet und in axialer Verlängerung der Ausnehmung (30) des Führungskäfigs einen Raum umgrenzt, der eine Winkelbewegung der Mutter (27) aus ihrer genannten Blockierstellung in eine genannte Durchgangsstellung durch die Löcher der miteinander zu verbindenden Teile (1,2) gestattet, und die Schraube an ihrem freien Ende in axialer Verlängerung ihres Gewindebereiches einen Ansatzteil (44) geringeren Durchmessers besitzt, der in der Mutter (27) engagiert bleibt und ein Mittel zu deren radialem Zurückhalten bildet.

5. Vorrichtung nach Anspruch 3 oder 4, dadurch gekennzeichnet, dass der Kopf (28) des Führungskäfigs (26) eine Ausnehmung mit Hinterschneidung (45) besitzt, und dass der Kopf (33) der Schraube (27) eine Form hat, die sein Einfügen in die genannte Ausnehmung unter Kraftaufbringung und sein Zurückhalten in dieser ermöglicht.

6. Vorrichtung nach einem der Ansprüche 4 oder 5, dadurch gekennzeichnet, dass die Mittel zum axialen Zurückhalten der Mutter (27) in dem Käfig (34) von einem Element gebildet werden, das einen Steg (38) bildet, der sich quer zur Achse der Schraube erstreckt und vorteilhafterweise leicht nach innen bezogen auf den Käfig gewölbt ist, um die Mutter (27) auf das Gewinde der Schraube (25) zurückzudrängen.

7. Vorrichtung nach einem der Ansprüche 4 bis 6, dadurch gekennzeichnet, dass der den Drehkäfig der Mutter (27) bildende Teil (34) Mittel (43) zum Blockieren der Mutter in ihrer vorgenannte Durchgangsstellung besitzt.

8. Vorrichtung nach einem der Ansprüche 4 bis 7, bei der der den Schaft (29) des Führungskäfigs (26) bildende Teil zwei Schenkel (37) mit nach Aussen halbzylindrischer Form besitzt, die zwischen sich die vorgenannte Ausnehmung (30) rechteckiger Form begrenzen, und die Mutter (22) ein ovales demjenigen des genannten Schaftes entsprechendes Profil besitzt, dadurch gekennzeichnet, dass der den Drehkäfig (34) dem Mutter (27) bildende Teil eine Wand (35,36) geringeren Durchmessers in Verlängerung der Aussenfläche jedes Schenkels (29) des Schaftes des Führungskäfigs besitzt, die sich vom Rand der Führungsausnehmung (30) bis im wesentlichen zur Längsachse des Querschnitts von dieser über einen Viertelkreis erstreckt, wobei diese Wände (35,36) symmetrisch zur Achse des Führungskäfigs angeordnet sind, und dadurch, dass die abgerundeten Enden (37) der Mutter (27) jeweils einen Bereich mit einem halbkreisförmigen Profil (40), dessen Radius etwas kleiner ist als der Radius der Innenfläche der Käfigwände (35,36) und einen Bereich mit einem halbkreisförmigen Profil (41) , dessen Radius gleich dem Radius der Aussenfläche des Schaftes des Führungskäfigs ist, besitzt, wobei eine Schulter (42) zwischen den zwei Endbereichen (40,41) der Mutter so gebildet ist, dass die Winkelbewegung der Mutter (27) in dem Käfig (34) auf eine Viertelumdrehung begrenzt ist.

9. Vorrichtung nach einem der Ansprüche 1 bis 3, dadurch gekennzeichnet, dass der Kopf (15) des Führungskäfigs (4) eine Ausnehmung (23) besitzt, die an ihrem offenen Ende einen Bereich aufweist, der eine elastisch verformbare Lippe (46) bildet und sich radial zur Achse der Mutter (27) erstreckt, und dass die Mutter (5) an ihrem sich auf den Kopf (15) des Führungskäfigs abstützenden Ende einen Bereich in Form einer Ringscheibe (47) besitzt, die radial nach Aussen vom Mutterradius vorspringt und einen Durchmesser hat, der grösser ist als der der kreisförmigen Lippe (46) des Kopfes (15) und kleiner ist als der der Ausnehmung (23), um das Zurückhalten der Mutter auf dem Kopf des Führungskäfigs durch Gefangenhalten des Ringscheibenbereiches (47) in der Ausnehmung (23) des Kopfes (15) gewährleisten.

Fig.1

Fig.2

Fig.3

Fig.4

Fig.5

Fig.6

Fig.7

Fig.8

Fig.9